# EUROPEAN PATENT SPECIFICATION

(11) **EP 2 475 034 B1**
(45) Date of publication and mention of the grant of the patent: **25.11.2020**
(21) Application number: 10016032.4
(22) Date of filing: 23.12.2010
(51) Int. Cl.: H01M 4/90, H01M 4/92, H01M 8/1007, H01M 8/1011, H01M 4/86

(54) **Membrane electrode assemblies for PEM fuel cells**
Membranelektrodenanordnungen für PEM-Brennstoffzellen
Ensembles électrode-membrane pour piles à combustible pem

(43) Date of publication of application: 11.07.2012
(73) Proprietor: Greenerity GmbH, 63457 Hanau-Wolfgang (DE)
(72) Inventor: Suchsland, Jens-Peter, Dr., 63067 Offenbach am Main (DE); Binder, Matthias, 63594 Hasselroth (DE); Zandona, Nicola, Dr., 5000 Namur (BE)
(74) Representative: Hoefer & Partner Patentanwälte mbB

(56) References cited:
- WO-A1-2005/049199
- WO-A1-2007/119134
- WO-A1-2011/021034
- JP-A- 2008 041 411
- US-A1- 2004 013 935
- US-B1- 6 936 370

## Description

### FIELD OF THE INVENTION

The invention relates to Membrane Electrode Assemblies ("MEAs") for solid-polymer-electrolyte proton-conducting membrane fuel cells ("PEM-FCs") having better performance and improved durability, in particular when operated under severe electrochemical conditions.

### BACKGROUND OF THE INVENTION

Fuel cells (FCs) are power generating electrochemical devices used or commercially foreseen for a wide range of different applications including, for instance, automotive drive train, stationary units for residential heating, embarked auxiliary power units, portable electronic equipments, remote or portable back-up units, etc.

A PEM Fuel cell (PEM-FC) is, more particularly, a fuel cell comprising a solid-polymer-electrolyte membrane (hereafter referred to as "membrane" for sake of convenience) such as, for instance, a proton-conducting perfluorosulfonic acid membrane or a hydrocarbon acid membrane. A PEM Fuel cell also comprises a cathode layer and an anode layer respectively located on each opposing side of the membrane. The anode and cathode layers are hereafter also called "electrode layers"

Examples of PEM-FCs are hydrogen PEM-FCs , reformed-hydrogen PEM-FCs and direct methanol PEM-FCs. In the anode layer, an appropriate electrocatalyst, generally a platinum electrocatalyst or a platinum-alloy electrocatalyst, causes the oxidation of the fuel (for instance hydrogen or methanol) generating, notably, positive hydrogen ions (protons) and negatively charged electrons. The membrane allows only the positively charged hydrogen ions to pass through it in order to reach the cathode layer, whereas the negatively charged electrons travel along an external circuit connecting the anode with the cathode, thus creating an electrical current.

Inside the cathode layer, an appropriate electrocatalyst, generally a platinum electrocatalyst, causes the electrons and the positively charged hydrogen ions to combine with oxygen to form water, which flows out of the cell.

The electrocatalysts generally used in PEM-FC consist of finely divided particles of platinum or platinum-alloys, usually supported on carbon, in order to assure an appropriate electrical conductivity and large electrochemically active surface area. Usually, the electrode layers also comprise a proton conducting electrolyte, hereinafter called "ionomer".

In the case of reformed-hydrogen and direct methanol PEM-FCs, the electrocatalysts used for the anode layers are usually platinum-alloy electrocatalysts, and the platinum-alloy is generally a platinum-ruthenium alloy specifically designed to efficiently oxidize either the hydrogen-rich gas produced by a reformer in the case of a reformed hydrogen PEM-FC or the methanol in the case of a direct methanol PEM-FC ("DMFC").

A PEM-FC usually comprises relatively thick porous layers, also called gas diffusion layers ("GDLs"). Such porous layers are located between the electrode layers and the field flow plates. Primary purposes of a GDL are to assure a better access of the reactant gases to the electrode layers and an efficient removal of water (in either liquid or vapor form) from the fuel cell, to enhance the electrical conductivity of the fuel cell assuring a better electrical contact between the electrode layers and the flow-field plates and last but not least to provide the mechanical strength necessary to preserve the structural integrity of the electrode layers.

The GDL usually comprises carbon paper or carbon woven cloth, possibly treated with variable amounts of per- or partly-fluorinated polymers and/or carbon particle pastes in order to properly control its electrical conductivity, mechanical strength, hydrophobicity, porosity and mass-transport properties.

The GDL may present either a mono- or a bi-layer structure. When the GDL presents a bi-layer structure, it typically consists of a relatively thick macroporous layer (also called GDL-substrate) usually oriented towards the flow field plate, and a relatively thin microporous layer ("GDL-MPL") usually oriented towards the electrode layer.

The main purpose of the GDL-MPL is to reduce the contact resistance between the electrode layer and the macroporous GDL substrate and to provide effective wicking of the liquid water from the electrode layer (generally the cathode) to the macroporous substrate.

The membrane electrode assembly (MEA) is a key component of the PEM-FC and has a significant influence on its end-use characteristics. The term MEA is generally used to indicate a multilayer structure comprising the combination of the membrane with the anode and the cathode layers and optionally, in addition, the two adjacent GDLs.

A PEM-FC generally consists of a stack usually comprising a large number of MEAs each of them placed between the corresponding flow fields plates. Several MEAs are stacked along with the corresponding flow field plates in a stack in order to produce high voltages for the desired application. Since the MEAs are electrically connected in series, the total PEM-FC stack current flows through all the MEAs simultaneously.

PEM-FCs may be operated under a wide range of different conditions (temperature; type, composition, flow rate and humidity of the inlet reactant gases, pressure, current, voltage, steady or highly dynamic, etc.). Such conditions strongly affect either initial MEA performance (e.g. voltage delivered at specific current density) and/or MEA life-time.

It is commonly known that MEA properties like performance and durability also depend on key electrode features like chemical composition and structure. However, the mechanisms how such electrode features precisely influence the electrochemical behavior of a MEA in a PEM-FC under different operating conditions (and ultimately define the PEM-FC end-use properties in real-life applications) are far from being fully understood. By consequence, the development of advanced MEAs is still partly empirical and based on "trial and error" approach.

Under certain critical operating conditions, the MEA and in particular its electrode layers may undergo severe degradation phenomena. MEA performance may be significantly and irreversibly affected, resulting in a drastic reduction of the PEM-FC operating life-time.

Such irreversible MEA degradation phenomena may occur, for instance, during start-up/ shut-down cycles and/or when certain reactants are not properly channeled to the complete surface of the electrodes (e.g. fuel starvation).

When, for instance, some MEAs within a stack undergo fuel starvation, their anode potential rises until values at which carbon, platinum and water are extensively oxidized. This reaction takes place in order to support the global current demand inside the stack.

Such undesired oxidation reactions may result in progressive corrosion of the carbon material usually contained in the electrode layers (e.g. electrocatalyst support) and eventually in the gas diffusion layers (GDLs), leading to loss in electrical conductivity and reduction of mass transport properties of the multilayer structure.

Besides, the oxidation of the active metal of the electrocatalyst, usually platinum or a platinum-alloy; may accelerate its dissolution and lead to a reduction of the active electrochemical surface area. As mentioned above, all these degradation phenomena are usually irreversible and may cause extensive reduction of the MEA performance over time. It is therefore important to find out ways to improve the stability of a MEA, especially under severe operating conditions as previously described.

Various methods to improve MEA durability have been proposed in the literature. Some of them are based on the design of MEAs, whose electrode layers comprise additional electrochemical active components susceptible to facilitate the oxidation of the water present in the PEM-FC and consequently avoid the oxidative decomposition of important MEA components (especially electrodes components like the carbon support of the electrocatalyst and/or the active metal itself).

In particular, US 2009/0162725 (to Asahi Glass Company) reports that the addition of unsupported iridium and/or ruthenium oxide particles into conventional PEM Fuel Cell anode electrodes based on platinum particles dispersed on carbon supports (Pt/C) may lower the potential for the oxygen evolution reaction, facilitating the oxidation of the water present in the PEM-FC and, ultimately, improving MEA durability.

However, US 2010/047668A1 (to 3M Company) teaches that the use of such iridium oxide particles does not adequately prevent the oxidation and degradation of fuel cell anodes comprising conventional Pt/C catalysts.

This document discloses an alternative solution intending to limit MEA degradation by adding a sub-monolayer equivalent of iridium atoms (in zero oxidation state) sputter deposited onto the surface of the catalyst. Although US 2010/047668A1 reports that such solution allows to substantially reduce the amount of iridium needed to minimize any carbon or platinum oxidation, the same document also states that, typically, in order to substantially reduce permanent degradation of MEA performance, the Pt/C catalyst has to be eliminated and replaced by a carbon-free nanostructured thin film ("NSTF") supported platinum catalyst.

This solution, besides being unsuitable for electrodes based on conventional Pt/C catalysts, presents some additional drawbacks. Notably, the preparation of the iridium atoms monolayer requires specific coating technologies, such as vacuum deposition technologies, which are not easily scaleable at a large industrial level. Moreover, the compact metallic iridium monolayer has the tendency to occlude the surface of the platinum catalyst, thus diminishing the mass transport properties of the electrode.

US 2009/0068541 A1 (to GM Global Technologies Operations) discloses a method to improve MEA stability during start-up and shut-down of the fuel cell. The method proposes to notably include in the cathode electrode an oxide of iridium (for instance IrOₓ with 0<x<2) or derivatives thereof in combination with a platinum on carbon electrocatalyst (Pt/C). The iridium component is present in an amount ranging from about 0.1 wt.-% to about 10 wt.-% of the platinum electrocatalyst (Pt/C). According to this patent application, the iridium oxide may be integrated in the cathode electrode either in an unsupported or a carbon-supported form. In the latter case, the carbon carrier is preferably a corrosion-resistant graphitized carbon. A relatively larger stabilization effect may be achieved using the oxide of iridium in a carbon supported form.

The method disclosed in US 2009/0068541A1, although being compatible with conventional and easily scalable coating techniques, presents however a major drawback consisting in the fact that when using iridium oxide in its supported version, the electrode has to comprise significant additional amounts of carbon which is known to be prone to oxidation and corrosion (even when graphitized).

Iridium oxide based catalysts supported on specific inorganic oxides rather than on carbon are disclosed in EP 1701790B1 (to Umicore AG & Co KG). This patent teaches that such iridium oxide based catalysts are suitable as anode catalysts in PEM electrolysers. Besides, their possible use in different electrolysis applications such as regenerative fuel cells and sensors is generally mentioned. However, EP 1701790B1 also teaches that the inorganic oxides used as support may impair the electrical conductivity of the electrodes. The possible use of such catalysts to improve the stability of regular PEM-FC MEAs under fuel starvation conditions and/or during start-up/shut-down cycles is neither described nor even proposed.
US 6,936,370 B1 teaches that in a solid polymer fuel cell series, various circumstances can result in the fuel cell being driven into voltage reversal. For instance, cell voltage reversal can occur if that cell receives an inadequate supply of fuel (for example, fuel starvation). In order to pass current during fuel starvation, reactions other than fuel oxidation may take place at the fuel cell anode, including water electrolysis and oxidation of anode components. The latter may result in significant degradation of the anode. Such fuel cells can be made more tolerant to cell reversal by promoting water electrolysis over anode component oxidation at the anode. This can be accomplished by incorporating a catalyst composition at the anode to promote the water electrolysis reaction, in addition to the typical anode electrocatalyst for promoting fuel oxidation.
JP 2008 041 411 A provides an electrode for a fuel cell suppressing corrosion in conductive carrier regardless of the type of conductive substance when voltage is suddenly varied. The electrode for the fuel cell is provided with catalysts with different functions which are the catalyst with higher water electrolysis reaction activity than platinum and the catalyst with oxygen reduction activity which is the same as the platinum alone or higher than the platinum.

WO2007/11134 discloses a fuel cell including an anode, a cathode and an electrolyte membrane arranged between the anode and the cathode. A fuel deficiency countermeasure is implemented for the anode and a fuel deficiency countermeasure is implemented for the cathode.

In summary, the available prior art indicates that the structure of the iridium based catalysts and the method used to incorporate them in the electrode strongly influence the stability and the performance of a PEM-FC MEA. It also appears that the different solutions disclosed so far are still unsuitable to avoid or even limit the electrochemical degradation of a MEA under harsh operating conditions without compromising key properties such as electrical conductivity, electrode mass transport properties and/or manufacturability.

### SUMMARY OF THE INVENTION

It is an object of the present invention to provide a membrane electrode assembly (MEA) for PEM-FC capable to solve most of the problems previously mentioned, in particular having improved durability under severe operating conditions without compromising performance and manufacturability.

To achieve the above-cited objects, the present invention, which is defined in the appended claims, provides a MEA characterized notably in that both of its two electrode layers (EL1 and/or EL2) comprise a first electrocatalyst EC1 comprising an iridium oxide component in combination with at least one other inorganic oxide component and a second electrocatalyst EC2 and EC2', which are free from iridium, and have different catalyst compositions, wherein EC2 is applied on one side of said membrane and EC2' is applied on the other side of said membrane.

It must be noted that inorganic oxides are generally characterized by relatively low electrical conductivity and high solubility in acid aqueous media especially in comparison to carbon (graphitized or amorphous) and metals.

Consequently, their incorporation into MEA electrodes, especially as alternative to ordinary carbon supports or to unsupported metallic iridium, might be expected to impair MEA end use properties, in particular performance and long term stability.

Nevertheless, the inventors have surprisingly found that MEAs comprising iridium oxide in combination with certain inorganic oxides provide excellent performance and performance/durability balance as compared to prior art solutions.

### DETAILED DESCRIPTION OF THE INVENTION

The present invention is directed to a membrane electrode assembly (MEA) for a PEM fuel cell comprising a ionomer membrane having two sides, a first electrode layer (EL1) applied to one side of said membrane and a second electrode layer (EL2) applied to the other side of said membrane,
wherein at both of the two electrode layers EL1 and/or EL2 comprise
- a first electrocatalyst EC1 comprising an iridium oxide component in combination with at least one other inorganic oxide component and
- a second electrocatalyst EC2 and EC2', which are free from iridium, and have different catalyst compositions, wherein EC2 is applied on one side of said membrane and EC2' is applied on the other side of said membrane.

According to the present invention, a PEM Fuel Cell (PEM-FC) is more particularly, a fuel cell comprising a solid polymer electrolyte membrane (hereafter referred to as "ionomer membrane" or "membrane" for sake of convenience) such as, for instance, a proton conducting perfluorosulfonic acid membrane or a proton conducting hydrocarbon acid membrane. A PEM-Fuel Cell also comprises a cathode layer and an anode layer respectively located on each opposing side of the membrane. The anode and cathode layers are hereafter also generically called "electrode layers". Preferably, both of the two electrode layers EL1 and/or EL2 of the MEA according to the present invention comprise no electrocatalysts other than the first electrocatalyst (EC1) and the second electrocatalyst (EC2) or the first electrocatalyst (EC1) and the second electrocatalyst (EC2').

The expression "iridium oxide component" as used in the context of this specification indicates iridium oxide particles. The expression "in combination with" referring to the "iridium oxide component" means that the iridium oxide component is finely deposited on or dispersed around the inorganic oxide component.

The iridium oxide component advantageously comprises iridium (IV)-oxide (IrO₂), iridium (III)- oxide (Ir₂O₃) and/or mixtures or combinations thereof. Preferably, the iridium oxide component essentially consists of iridium (IV)-oxide (IrO₂).

Advantageously, the inorganic oxide component comprises titania (TiO₂), silica (Si0₂), alumina (Al₂O₃), zirconia (ZrO₂), tin dioxide (SnO₂), ceria, niobium pentoxide (Nb₂O₅) tantalum pentoxide (Ta₂O₅) and/or mixtures or combinations thereof. Preferably, the inorganic oxide component essentially consists of refractory oxides such as titania (TiO₂), silica (SiO₂), alumina (Al₂O₃) and/or mixtures thereof. More preferably, the inorganic oxide component is titania (TiO₂).

Generally, the inorganic oxide component has a BET surface area of at least about 50 m²/g and preferably of at least about 100 m²/g. Besides, the inorganic oxide component has advantageously a BET surface area of at most about 400 m²/g and preferably of at most about 300 m²/g. The BET surface area is measured according to DIN 66132.

Generally, the inorganic oxide component is present in an amount of less than about 20 wt.-% based on the total weight of the first electrocatalyst (EC1), preferably of less than about 15 wt.-%. Besides, the inorganic oxide component is advantageously present in an amount of at least about 0.1 wt.-% based on the total weight of the first electrocatalyst (EC1) and preferably of at least about 1 wt.-%.

A particularly preferred first electrocatalyst EC1 is the iridium oxide/titania electrocatalyst of the type "Elyst® 1000480", commercially available from Umicore AG & Co KG, Hanau. This catalyst material typically contains about 85 to 89 wt.-% iridium (IV)-oxide (IrO₂) with the remainder being titania (TiO₂). However, other catalyst materials such as iridium oxide/alumina (Al₂O₃) or iridium oxide/zirconia (ZrO₂) may also be employed.

As second electrocatalyst EC2 it is possible to use most of the electrocatalysts known in the field of PEM fuel cells, as long as they are free of iridium (Ir). In the case of supported catalysts, finely divided, electrically conductive carbon may be used as carrier, with preference being given to using carbon blacks or graphites. Metal oxides or metal or ceramic cores may also be used as carriers. However, unsupported catalysts such as platinum blacks or platinum powders having a high surface area can also be used for producing the electrode layers. Catalytically active components employed are the elements of the platinum group of the Periodic Table except Ir (i.e. Pt, Pd, Ag, Au, Ru, Rh, Os) or alloys thereof. The catalytically active metals may contain further alloying base metals such as cobalt (Co), chromium (Cr), tungsten (W) or molybdenum (Mo) and mixtures and combinations thereof.

The second electrocatalyst (EC2) is advantageously a platinum electrocatalyst or a platinum-alloy electrocatalyst. Said platinum electrocatalyst and said platinum-alloy electrocatalyst are preferably supported on a carbon carrier, on a metal oxide carrier or on metal or ceramic core carrier. Preferably they are supported on a carbon carrier or on a metal oxide carrier. In some embodiments of the present invention they are more preferably supported on a carbon black carrier, examples for suitable electrocatalysts are 20 wt.-% Pt/C or 40 wt.-% Pt/C. In some other embodiments of the present invention they are more preferably supported on a metal oxide carrier.

Examples for electrocatalysts supported on metal or ceramic core carriers are the so called core-shell type electrocatalysts (as described in WO2008025751A1). The carbon carrier is preferably an amorphous, high surface carbon black or a graphitized carbon. More preferably it is a graphitized carbon.

It should be noted, that under the term "EC2", in particular when used in the same MEA/CCM configuration, not necessarily identical catalysts are employed. In some of the embodiments described below, the catalyst EC2 may be applied in the anode and in the cathode layer and may represent different catalyst compositions, which all fulfill the requirements as defined for EC2. In such cases, the terms EC2 and EC2' are used for clarification.

In the present invention, the PEM-FC is a hydrogen PEM-FC, a reformed-hydrogen PEM-FC or a Direct Methanol PEM-FC (DMFC). The terms "hydrogen PEM-FCs", "reformed-Hydrogen PEM-FCs" and "Direct Methanol PEM-FCs" indicate specific types of PEM-FCs as a person skilled in the art can easily recognize.

In the case of a hydrogen PEM-FC, a stream of essentially pure hydrogen fuel is delivered through specifically designed flow field plates to the anode layer, while a stream of air or essentially pure oxygen is delivered to the cathode layer. In the case of a reformed-hydrogen PEM-FC, the fuel is a hydrogen rich-gas (reformed hydrogen, "reformate") comprising, beside hydrogen, additional gas components like, notably, CO, CO₂ and/or N₂. In the case of a Direct Methanol PEM-FC, the fuel stream provided to the anode generally comprises a mixture of methanol and water.

Generally, the term "anode electrode layer" indicates the electrode layer where, under normal operating conditions, fuel is oxidized. The term "cathode electrode layer" indicates the electrode layer where, under normal operating conditions, oxygen is reduced.

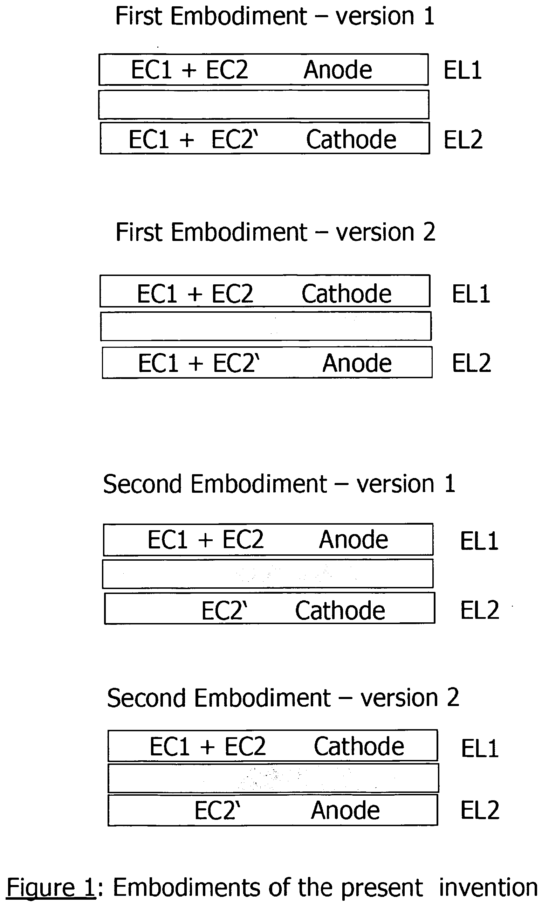

In **Figure 1****,** the various embodiments of the present invention are schematically outlined. Herein, a 3-layer structure is shown with the membrane layer (in grey) separating the electrode layers EL1 and EL2, which contain the various electrocatalysts. However, it should be noted that **Figure 1** is a purely schematical drawing and should not be limiting the invention, wherein, embodiments wherein the electrode layers may be applied first to the corresponding GDL substrates and thereafter to the membrane may also be encompassed.

In the first embodiment which falls under the scope of the present invention, both electrode layers, EL1 and electrode layer EL2, comprise the first electrocatalyst (EC1) comprising an iridium oxide component in combination with at least one other inorganic oxide component and a second electrocatalyst (EC2, EC2'), which is free from iridium.

In this first embodiment, both electrode layer EL1 and electrode layer EL2 preferably comprise no catalysts other than the first electrocatalyst (EC1) and a second electrocatalyst (EC2, EC2'), which is free from iridium.

In a first version of said first embodiment, the electrode layer EL1 is the anode electrode layer and the second electrocatalyst (EC2) comprised in EL1 is advantageously a platinum catalyst; whereas the electrode layer EL2 is the cathode electrode layer and the second electrocatalyst (EC2') comprised in EL2 is advantageously a platinum electrocatalyst or a platinum-alloy electrocatalyst. In this first version of said first embodiment, the PEM-FC is preferably a hydrogen PEM-FC. Besides, the platinum-alloy electrocatalyst (EC2') comprised in EL2 is preferably a platinum-cobalt (Pt/Co) electrocatalyst.

In a second version of said first embodiment, the electrode layer EL1 is the cathode electrode layer and the second electrocatalyst EC2 comprised in EL1 is advantageously a platinum electrocatalyst or a platinum-alloy electrocatalyst, whereas the electrode layer EL2 is the anode electrode layer and the second electrocatalyst EC2' comprised in EL2 is advantageously a platinum-alloy electrocatalyst. In this second version of said first embodiment, the PEM-FC is preferably a reformed hydrogen PEM-FC or a Direct Methanol PEM-FC. In a preferred variant of this second version, the platinum-alloy electrocatalyst EC2' comprised in EL2 is a platinum-ruthenium (Pt/Ru) electrocatalyst ,

In this second version, when the PEM-FC is a reformed hydrogen PEM-FC, then the platinum-alloy electrocatalyst (EC2) comprised in EL1 is preferably a platinum-cobalt (Pt/Co) electrocatalyst.

In the second embodiment which does not fall under the scope of the present invention, the electrode layer EL1 comprises the first electrocatalyst EC1 and the second electrocatalyst EC2, whereas the electrode layer EL2 comprises no electrocatalysts other than an iridium-free electrocatalyst EC2'. In this second embodiment, the electrode layer EL1 preferably comprises no electrocatalysts other than the first electrocatalyst EC1 and the second electrocatalyst EC2.

The iridium-free electrocatalyst EC2' contained in EL2 complies with all the main features previously described for EC2. The iridium-free electrocatalyst EC2' is advantageously a platinum or a platinum-alloy electrocatalyst. Said platinum electrocatalyst and said platinum-alloy electrocatalyst are advantageoulsy supported on a carbon carrier, on a metal oxide carrier or on metal or ceramic core carrier. Preferably they are supported on a carbon carrier or on a metal oxide carrier. In some embodiments of the present invention they are more preferably supported on a carbon carrier. In some other embodiments of the present invention they are more preferably supported on a metal oxide carrier. As previously mentioned, examples of electrocatalysts supported on metal or ceramic core carriers are the so called core-shell type electrocatalysts. The carbon carrier is preferably an amorphous high surface carbon black or a graphitized carbon. More preferably it is a graphitized carbon.

In the first version of said second embodiment which does not fall under the scope of the present invention, the electrode layer EL1 is the anode electrode layer and the electrode layer EL2 is the cathode electrode layer. In this first version of said second embodiment, the PEM-FC is preferably a hydrogen PEM-FC. Besides, when the second electrocatalyst EC2' contained in EL2 is a platinum-alloy electrocatalyst, said platinum-alloy electrocatalyst is preferably a platinum-cobalt (PtCo) electrocatalyst. Similarly, when the second electrocatalyst EC2 contained in EL1 is a platinum-alloy electrocatalyst, also said platinum-alloy electrocatalyst is preferably a platinum-cobalt electrocatalyst.

In a second version of said second embodiment which does not fall under the scope of the present invention, the electrode layer EL1 is the cathode electrode layer and the electrode layer EL2 is the anode electrode layer. In this second version of said second embodiment, the PEM-FC is preferably a reformed-hydrogen PEM-FC or a Direct Methanol PEM-FC. Besides, in this second version, the iridium-free second electrocatalyst (EC2') contained in EL2 is preferably a platinum-alloy electrocatalyst and more preferably a platinum-ruthenium electrocatalyst.

According to the present invention, in all embodiments described above, the first electrocatalyst (EC1) is present in the electrode layer EL1 in a maximum amount of about 80 wt.-%, based on the total weight of the first and second electrocatalysts (EC1+EC2), Preferably in a maximum amount of about 70 wt.-%, more preferably in a maximum amount of about 60 wt.-%, still more preferably in a maximum amount of about 50 wt.-%.

Advantageously, the first electrocatalyst EC1 is present in an amount of at least about 0.5 wt.-% based on the total weight of the first and second electrocatalysts (EC1+EC2), preferably of at least about 1 wt.-%, more preferably of at least about 2 wt.-% and still more preferably of at least about 3 wt.-%.

In summary, the first electrocatalyst EC1 may be present in the first electrode layer EL1 in an amount in range of about 0.5 to 80 wt.-%, preferably in the range of about 1 to 70 wt.-%, more preferably in the range of about 2 to 60 wt.-% and still more preferably in the range of 3 to 50 wt.-%, based on the total weight of the first and second electrocatalysts (EC1+EC2).

It should be noted that, in all embodiments of the present invention, the first electrocatalysts (i.e. the iridium oxide-based catalyst EC1) and the second electrocatalysts (iridium-free catalysts EC2/EC2') may not necessarily be present as homogeneous catalyst mixtures. To the contrary, they may also be present in the electrode layer in so-called double layer, triple layer or multilayer structures. Furthermore, graduated layer structures are possible, in which, for example, the concentration of the iridium oxide-based electrocatalyst EC1 is gradually decreased towards the top of the electrode facing the GDL and increasing towards the membrane surface. Such embodiments are also enclosed in the present invention.

According to a general aspect of the present invention, the first electrode layer EL1, provided on one side of the ionomer membrane, and the second electrode layer EL2, provided on the other side of the ionomer membrane, are both applied on said ionomer membrane. The 3-layer MEA structure thus obtained, also called for short "Catalyst Coated Membrane" ("CCM"), consists of the first electrode layer EL1, the second electrode layer EL2 and the ionomer membrane placed between the two aforementioned electrode layers (layer structure EL1/ionomer membrane/EL2). The electrodes may be applied to the ionomer membrane by methods known to those skilled in the art (for instance by direct coating of the membrane with a catalyst ink and subsequent drying or by a DECAL transfer process).

The catalyst-coated membrane (CCM) is preferably used in combination with a first gas diffusion layer (GDL1), provided on the opposite side of the first electrode layer EL1 from the membrane, and a second gas diffusion layer (GDL2), provided on the opposite side of the second electrode layer EL2 from said membrane. The GDLs may be combined with the CCM directly during the assembly of the PEM-FC (concept of "loose GDLs").

Another possibility is to preliminary bond the gas diffusion layers GDL1 and GDL2 to the CCM via a lamination process consisting to submit the corresponding 5-layers MEA structure (GDL1/EL1/membrane/EL2/GDL2) to appropriate heat and/or pressure.

Alternatively or concurrently, the gas diffusion layers GDL1 and GDL2 may be combined to the CCM via a process consisting to integrate in the peripheral region of the MEA a rim (generally a thermoplastic polymer film) aiming to assure the necessary level of adhesion between the membrane and the GDLs across the edge of the multilayer structure. The multilayer MEA structures comprising a CCM are also called CCM-MEA.

According to another aspect of the present invention, the electrode layers EL1 and EL2 are both supported on gas diffusion layers GDL1 and GDL2. When the electrode layers EL1 and EL2 are supported on gas diffusion layers GDL1 and GDL2, the gas diffusion layers are preferably presenting a bi-layer structure comprising a thicker macroporous layer (also called the GDL-substrate) and a relatively thinner microporous layer (also called "MPL"), and the electrode layers essentially lay on the top of the GDL-MPLs.

A GDL carrying an electrode layer applied to one of its faces is also called a "catalyst coated backing ("CCB"). Two CCBs respectively comprising EL1 and EL2 are generally laminated on each side of a membrane thus obtaining a multilayer MEA structure, also called CCB-MEA. The MEA according to the invention, either in the CCM or CCB version, may also comprise additional parts or components like notably a protective rim and/or sealings.

For the preparation of the MEA of the present invention, suitable catalyst inks are prepared. Such inks generally comprise the electrocatalysts EC1, EC2 and EC2' (either alone or in combination), an organic solvent component, at least one ionomer component, water and optionally, in addition, at least one additive component.

Generally, a wide range of the organic solvents is suitable, examples are primary, secondary or tertiary alcohols, aliphatic monoketones, aliphatic diketones or mixtures thereof. Preferably the organic solvent of the ink comprises tertiary alcohols, aliphatic diketones or mixtures thereof, which are stable to oxidative degradation. Suitable ink solvent compositions are, for example, disclosed in WO2006/103035 and related patent applications.

The organic solvent component contained in the catalyst inks is present in the range of 10 to 80 wt.-% based on the total weight of the ink, the water is present in the range of 5 to 50 wt.-% based on the total weight of the ink. The ionomer component is preferably provided as liquid composition (e.g. PFSA dispersion), i.e. dissolved or dispersed in suitable solvents such as water and/or low boiling alcohols. The ionomer content of the solutions or dispersions is usually in the range of 5 wt.-% to about 30 wt.-% based on the total weight of the solution or dispersion. Examples for suitable ionomer components, which are commercially available, are the Nafion®, Aquivion®, Flemion® or Aciplex® ionomer products.

Additive components suitable for the catalyst ink of the present invention are for example binders, co-solvents, wetting agents, antifoaming agents, surfactants, anti-settling agents, preservatives, pore formers, leveling agents, stabilizers, pH-modifiers, rheology modifiers and other substances.

The catalyst inks of the present invention can be prepared using various dispersing equipments (e.g. high-speed stirrers, roll mills, vertical or horizontal bead mills, speed-mixers, magnetic mixers, mechanical mixers, ultrasonic mixers, etc.).

For the preparation of the catalyst layers of the present invention, the corresponding catalyst inks may be applied directly to an ionomer membrane. However, they can also be applied to a gas diffusion layer or to other substrate materials (e.g. polymer films or DECAL release films). For this purpose, it is possible to use various coating processes known to the person skilled in the art, such as doctor blade coating, reel-to-reel knife coating, spraying, rolling, brushing, screen printing, stencil printing, offset printing or gravure printing.

After the application of the catalyst inks to a suitable substrate, drying of the ink is performed using well known drying methods such as, e.g., IR-, conventional heat or hot air drying. The temperatures for drying are generally in the range from 50 to 150°C for about 5 to 60 mins.

When using the DECAL technology, the dried catalyst layers are generally transferred to the ionomer membrane by lamination processes employing heat and pressure. Such processes are well known to the person skilled in the art. More details are given in the Examples.

As documented in the Examples and Comparative Examples (CE) in the Experimental section, the performance of the MEAs with the catalyst layers of the present invention (which comprise the iridium oxide catalyst in combination with an inorganic oxide component) is significantly improved. As documented in reference Example 1 and CE1, the cell reversal tolerance (CRT) of MEAs is markedly better due to the presence of iridium catalyst EC1 in the anode layer. In addition to that, MEAs comprising a cathode layer containing the iridium catalyst EC1 of the present invention is markedly superior in start-up/shut-down (SUSD) tests compared to a comparative MEA employing a cathode layer with conventional iridium oxide powder.

The above description of illustrated embodiments, including the description in the Abstract, is not intended to be exhaustive or to limit the embodiments to the precise forms disclosed.

Although specific embodiments of and examples are described herein for illustrative purposes, various equivalent modifications can be made without departing from the spirit and scope of the disclosure, as will be recognized by those skilled in the relevant art. The teachings of the various embodiments provided herein may be applied to all types of MEAs, not necessarily the exemplary PEM-MEAs described above.

The various embodiments described above can be combined to provide further embodiments within the scope of the claims. These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled.

### EXPERIMENTAL SECTION

### Electrochemical Testing

Electrochemical testing is performed in a 50 cm² fuel cell (in-house built) fitted with graphitic double channel serpentine flow fields having a channel width of ∼ 0.8 mm. The cell is operated in counter flow, i.e. the fuel inlet corresponds to the oxidant outlet on the opposite side of the MEA, while the oxidant inlet corresponds to the fuel outlet. The catalyst coated membranes (CCMs) are sealed with in-compressible glass-fibre reinforced PTFE gaskets. The gas diffusion layers (GDLs) used in the experiments are SGL25 BC on anode and cathode side respectively. The cell is equipped with two K-type thermocouples, one in the aluminum end plate and the other in the graphite bipolar plate. The endplates are fitted with resistive heating pads. The cell is air cooled by a ventilator. Operating gases are humidified using in-house built cooled/heated bubblers.

Hydrogen/oxygen I/V-polarization measurements are performed at begin of life ("BOL") and end of tests ("EOT"). The operating pressure is 1.5 bar with cell temperatures of 85°C and anode/cathode stoichiometries of 1.5/2; anode and cathode humidified at 68°C.

Prior to performance and accelerated degradation testing of the MEAs, cells are conditioned under hydrogen/air for 8 hours at 1 A cm⁻² at a pressure of 1.5 bar, T_{cell} of 80°C, Humidifier temperature of 80°C (anode) and 64°C (cathode). Exhaust gas CO₂ content is determined by an IR analyzer (Rosemount Binos 100 2 M; maximal range 5.000 ppm) during the degradation protocols.

At BOL and EOT of each experiment, the platinum surface area of the anode and the cathode are measured by cyclic voltammetry ("electrochemical area", ECA). The cell volt-ammograms are measured at room temperature with nitrogen at the working electrode (WE) and a mixture of hydrogen and nitrogen (3/40) at the counter/reference (CE/RE) electrode. The gas fluxes are set at the WE to 40 nl h⁻¹ and 43 nl h⁻¹ at the CE/RE.

### Start up shut down testing ("SUSD"):

To determine degradation induced by air/air start up/shut down of MEAs, a potentio-static holding experiment is used to mimic high potentials. For these experiments the working electrode ("cathode") is purged with nitrogen (gas flux 40 nl h⁻¹) and then set to a potential of 1.6 V versus the reference/counter electrode ("anode") which is supplied with humidified hydrogen at a gas flux of 30 nl h⁻¹. The cell is operated at 80°C, ambient pressure and at full humidification of both gases. After 30 mins, the nitrogen is substituted by oxygen again and after a short conditioning period, the I/V polarization curve is measured again. Based on this EOT polarization curve, the cell voltage E (mV) is reported at a current density of 1 A/cm². BOL and EOT measurements and analytics are performed as described above.

### Cell reversal tolerance ("CRT"):

In this test, the supply of hydrogen gas to the anode is interrupted and substituted by nitrogen flow. An artificial cell reversal event is subjected to the tested MEAs by purging the anode with nitrogen (gas flux 10 nl h⁻¹) while on the cathode air (at 20 nl h⁻¹) is flowing, drawing a constant anodic current of to 0.187 A/cm² for 2700 seconds (45 mins). The test is done at 80°C at ambient pressure with fully humidified gases. A potential alert is set to a cell voltage of -2.5 V. In case this value is reached during testing, the test is interrupted to prevent damage to the fuel cell. After 45 mins, the nitrogen is substituted by hydrogen again and after a short conditioning period, a polarization curve is measured again. Based on this EOT polarization curve, the cell voltage E (mV) is reported at a current density of 1 A/cm². BOL and EOT measurements and analytics are performed as described above.

Results of the electrochemical tests are reported in the context of the following examples. Provided below are examples illustrative of the present invention, but not limitative thereof.

### REFERENCE EXAMPLE 1

This reference example outlines the preparation of a MEA according to the first version of the second embodiment not falling under the scope of the invention. The anode layer EL1 contains the iridium oxide catalyst EC1 and electrocatalyst EC2, whereas the cathode layer contains electrocatalyst EC2' (ref to **Figure 1****).**
1. a) Preparation of anode catalyst ink: A mixture comprising 33.5 g of the ionomer component (Aquivion® D83-20B, 20 wt.-% ionomer in water; Solvay-Solexis S.p.a.), 25.13 g of solvent 4-Hydroxy-4-methyl-2-pentanone (diacetone alcohol, MERCK) and 25.13 g of solvent tert.-butanol (MERCK) is stirred and heated at 60°C for 1 hour in a round bottom flask. The mixture is cooled to room temperature and transferred into a stainless steel vessel of a mixer equipped with a mechanical stirrer. Then an additional amount of solvent 4-Hydroxy-4-methyl-2-pentanone is added (7.73 g), while keeping the mixture under gentle stirring.
Subsequently, 7.41 g of electrocatalyst EC2 (20 wt.-% Pt/C, Umicore AG & Co KG, Hanau) and 1.11 g of the electrocatalyst EC1 (Elyst® 1000480; 88.4 wt.-% IrO₂ on TiO₂; corresponding to metal content of 75.8 wt.-% Ir; catalyst according to EP 1701790B1; Umicore AG & Co KG, Hanau) are added. The amount of EC1 in the total catalyst mixture (EC1+EC2) is 13 wt.-%. The overall catalyst/ionomer weight ratio in the electrode is 1.27:1. The mixture is further stirred for 5 minutes and the stirring speed is raised. The final anode ink is recovered from the bottom of the vessel through a discharge valve by applying a mild nitrogen overpressure on the top of the dispersion.
2. b) Preparation of cathode catalyst ink: This ink is prepared according to the same procedure described above in a) with the following variations: the amount of ionomer component is 26.3 g, the amount of 4-Hydroxy-4-methyl-2-pentanone is 19.7 g for the first addition and 23.5 g for the second addition, the amount of tert.-butanol is 19.7 g. Besides, the iridium free second electrocatalyst EC2' is added instead of the two electrocatalysts EC1 and EC2. The EC2' used for the preparation of the cathode ink is a Pt-based electrocatalyst supported on carbon black (40 wt.-% Pt/C, Umicore AG & Co KG, Hanau). It is added in an amount of 10.8 g. The catalyst/ionomer ratio in the electrode is 2.05:1.
3. c) Preparation of the CCM: A three-layer MEA (CCM) comprising electrode layers EL1, EL2 and a membrane (layer structure EL1/membrane/EL2) is prepared according to the following procedure:
In the first step, the precursors of the electrode layers EL1 and EL2 (i.e. EL1-DECAL and EL2-DECAL) are applied on a DECAL release film by knife-coating the corresponding anode and cathode inks and drying the wet layers in a belt dryer at 95°C for 10 mins. In the second step, the electrode layer precursors EL1-DECAL and EL2-DECAL are transferred from the DECAL release film to the ionomer membrane (Nafion® 212, Du Pont) by positioning the electrode precursors on each side of the membrane (with electrodes facing the membrane) and applying a pressure of 175 N/cm² at a temperature of 170°C.
4. d) Preparation of the MEA: The CCM thus obtained is combined with a first gas diffusion layer GDL1, attached to the opposite side of the first electrode layer EL1 from the membrane, and a second gas diffusion layer GDL2, attached to the opposite side of the second electrode layer EL2 from said membrane. The gas diffusion layers GDL1 and GDL2 were combined to the CCM directly in the PEM-FC.

| Electrochemical testing (Cell reversal tolerance, CRT) | |
|---|---|
| Anode catalyst loading: | 0.09 mg Pt/cm² and 0.05 mg Ir/cm² |
| Cathode catalyst loading: | 0.4 mg Pt/cm², no Ir |
| Cell reversal tolerance (CRT - BOL): | E = 683 mV (@ 1 A/cm²) |
| Cell reversal tolerance (CRT - EOT): | E = 656 mV (@ 1 A/cm²) |
| Performance loss | - 27 mV (- 3.9 %) |
| Electrochemical area (CRT - BOL): | 49 m²/g |
| Electrochemical area (CRT - EOT): | 40 m²/g |

As can be seen, the cell reversal tolerance (CRT) of the MEA is greatly improved due to the presence of iridium catalyst EC1 in the anode layer. The overall loss of - 27 mV (-3.9 %) indicates a very stable system with low degradation.

### COMPARATIVE EXAMPLE 1

In contrast to reference Example 1, this comparative Example is directed to an MEA having an anode layer EL1 which contains a commercially available iridium oxide (IrO₂) powder (instead of electrocatalyst EC1) in combination with the same EC2 electrocatalyst used in reference Example 1.

The preparation of anode catalyst ink is conducted according the description of reference Example 1. A mixture comprising 33.5 g of the ionomer component and solvents 4-Hydroxy-4-methyl-2-pentanone and tert.-butanol is stirred and heated at 60°C for 1 hour in a round bottom flask and the additional amount of solvent 4-Hydroxy-4-methyl-2-pentanone is added while keeping the mixture under gentle stirring. Subsequently, 7.41 g of electrocatalyst EC2 (20 wt.-% Pt/C, Umicore AG & Co KG, Hanau,) and 1.0 g of iridium dioxide powder (CAS No. 12030-49-8; > 99.0 wt.-% IrO₂, corresponding to metal content of approx. 86 wt.-% Ir; commercially available from different vendors) are added. The amount of iridium dioxide in the total catalyst mixture (IrO₂+EC2) is 11.9 wt.-%. The overall catalyst/ionomer weight ratio in the electrode is 1.25:1. The mixture is further stirred for 5 minutes and the stirring speed is raised. The final anode ink is recovered from the bottom of the vessel through a discharge valve by applying a mild nitrogen overpressure on the top of the dispersion. The preparation of the cathode catalyst ink and the CCM/MEA preparation steps are conducted as described in reference Example 1.

| Electrochemical testing (Cell reversal tolerance. CRT) | |
|---|---|
| Anode catalyst loading: | 0.09 mgPt/cm² and 0.05 mg Ir/cm² |
| Cathode catalyst loading | 0.4 mg Pt/cm², no Ir |
| Cell reversal tolerance (CRT - BOL): | E = 689 mV (@ 1 A/cm²) |
| Cell reversal tolerance (CRT - EOT): | > 2.5 V, measurement interrupted |
| Electrochemical area (CRT - BOL): | 41 m²/g |
| Electrochemical area (CRT - EOT): | measurement interrupted |

As a result, due to the absence of electrocatalyst EC1 in the anode layer, the CRT is very poor. The test has to be interrupted to prevent damage of the fuel cell, as the cell voltage exceeds a voltage of - 2.5 V, indicating a very poor cell reversal tolerance.

### REFERENCE EXAMPLE 2

This reference example demonstrates the preparation of a MEA according to the second version of the second embodiment not falling under the scope of the invention. The anode layer EL2 contains an iridium-free Pt/C electrocatalyst EC2', whereas the cathode layer EL1 contains the iridium oxide-catalyst EC1 in combination with electrocatalyst EC2 (ref to **Figure 1****).**
1. a) Preparation of the cathode catalyst ink: A mixture comprising 26.0 g of the ionomer component (Aquivion® D83-20B, 20 wt.-% ionomer in water; Solvay-Solexis S.p.a.) and
   19.5 g of 4-Hydroxy-4-methyl-2-pentanone and 19.5 g tert.-butanol is stirred and heated at 60°C for 1 hour in a round bottom flask. Then the additional amount of 24.0 g of 4-Hydroxy-4-methyl-2-pentanone is added while keeping the mixture under gentle stirring. Subsequently, 10.6 g of electrocatalyst EC2 (40 wt.-% Pt/C, Umicore AG & Co KG, Hanau) and 0.53 g of electrocatalyst EC1 (Elyst® 1000480; 87 wt.-% IrO₂ on TiO₂; Umicore AG & Co KG, Hanau) are added. The amount of EC1 in the total catalyst mixture (EC1+EC2) is 4.8 wt.-%. The overall catalyst/ionomer weight ratio in the electrode is 2.15:1. The mixture is further stirred for 5 minutes and the stirring speed is raised. The final cathode ink is recovered from the bottom of the vessel through a discharge valve by applying a mild nitrogen overpressure on the top of the dispersion.
2. b) Preparation of anode catalyst ink: This ink is prepared as described above, with the following variations: the amount of ionomer component is 33.7 g, the amount of 4-Hydroxy-4-methyl-2-pentanone is 25.2 g for the first addition and 8.5 g for the second addition, the amount of tert.-butanol is 25.2 g. The second electrocatalyst EC2' used for the preparation of the ink is a Pt/C electrocatalyst (20 wt.-% Pt/C, Umicore AG & Co KG, Hanau) and its amount is 7.4 g.

The CCM/MEA preparation steps were conducted as described in reference Example 1.

| Electrochemical testing (Start up/shut down tests. SUSD) | |
|---|---|
| Anode catalyst loading: | 0.09 mg Pt/cm², no Ir |
| Cathode catalyst loading: | 0.40 mg Pt/cm² and 0.04 mg Ir/cm² |
| Start up/Shut down (SUSD - BOL): | E = 703 mV (@ 1 A/cm²) |
| Start up/Shut down (SUSD - EOT): | E = 574 mV (@ 1 A/cm²) |
| Performance loss BOL-EOT | - 129 mV |

These results indicate a very stable behavior in SUSD testing (ref to CE2).

### COMPARATIVE EXAMPLE CE2

This example is a Comparative Example (CE2) to reference Example 2. The elements are similar to reference Example 2, except for the iridium-containing catalyst EC1. The anode layer EL2 contains a Pt/C electrocatalyst (EC2'), whereas the cathode layer EL1 contains a conventional iridium oxide powder and electrocatalyst EC2.
1. a) Preparation of the cathode catalyst ink: A mixture comprising 25.8 g of the ionomer component (Aquivion® D83-20B, 20 wt.-% ionomer in water; Solvay-Solexis S.p.a.) and 19.5 g of solvent 4-Hydroxy-4-methyl-2-pentanone and 19.5 g of solvent tert.-butanol is stirred and heated at 60°C for 1 hour in a round bottom flask. Then the additional amount of 24.0 g of solvent 4-Hydroxy-4-methyl-2-pentanone is added while keeping the mixture under gently stirring. Subsequently, 10.6 g of electrocatalyst EC2 (40 wt.-% Pt/C, Umicore AG & Co KG, Hanau) and 0.9 g of iridium dioxide powder (CAS No. 12030-49-8; > 99.0 wt.-% IrO₂) are added. The amount of iridium dioxide powder in the total catalyst mixture is 8.1 wt.-%. The overall catalyst/ionomer weight ratio in the electrode is 2.2:1.
   The mixture is further stirred for 5 minutes and the stirring speed is raised. The final cathode ink is recovered from the bottom of the vessel through a discharge valve by applying a mild nitrogen overpressure on the top of the dispersion. The preparation of the cathode catalyst ink and the CCM/MEA preparation steps are conducted as described in reference Example 1.
2. b) Preparation of anode catalyst ink: This ink is prepared as described in reference Example 2, step b).

| Electrochemical testing (Start up/Shut down tests; SUSD) | |
|---|---|
| Anode catalyst loading: | 0.09 mg Pt/cm², no Ir |
| Cathode catalyst loading: | 0.4 mg Pt/cm² and 0.08 mg Ir/cm² |
| Start up/Shut down (SUSD - BOL): | E = 695 mV (@ 1 A/cm²) |
| Start up/Shut down (SUSD - EOT): | E = 513 mV (@ 1 A/cm²) |
| Performance loss BOL-EOT | - 182 mV |

As can be seen, the cell voltage loss of - 182 mV after SUSD testing is significantly higher compared to the result obtained in reference Example 2 (- 129 mV). Thus, the cathode catalyst layer containing the iridium dioxide/titania catalyst is markedly superior compared to the electrode containing the conventional iridium dioxide powder.

### EXAMPLE 3

This example outlines the preparation of a MEA according to the first version of the first embodiment of the invention. Both electrode layers, anode layer EL1 and cathode layer EL2 contain the iridium-catalyst EC1. Further, second electrocatalysts EC2 is contained in the anode layer and second electrocatalyst EC2' is applied in the cathode layer (ref to **Figure 1**).
1. a) Preparation of anode catalyst ink: A mixture comprising 33.5 g of the ionomer component (Aquivion® D83-20B, 20 wt.-% ionomer; Solvay-Solexis S.p.a.), 25.13 g of solvent 4-Hydroxy-4-methyl-2-pentanone (diacetone alcohol, MERCK) and 25.13 g of solvent tert.-butanol (MERCK) is stirred and heated at 60°C for 1 hour in a round bottom flask. The mixture is cooled to room temperature and transferred into a stainless steel vessel of a mixer equipped with a mechanical stirrer. Then an additional amount of solvent 4-Hydroxy-4-methyl-2-pentanone is added (7.73 g), while keeping the mixture under gentle stirring.
   Subsequently, 7.41 g of electrocatalyst EC2 (20 wt.-% Pt/C, Umicore AG & Co KG, Hanau) and 1.11 g of the electrocatalyst EC1 (Elyst® 1000480, 87 wt.-% IrO₂ on TiO₂, Umicore AG & Co KG, Hanau) are added. The amount of EC1 in the total catalyst mixture (EC1+EC2) is 13.0 wt.-%. The overall catalyst/ionomer weight ratio in the electrode is 1.27:1. The mixture is further stirred for 5 minutes and the stirring speed is raised. The final anode ink is recovered from the bottom of the vessel through a discharge valve by applying a mild nitrogen overpressure on the top of the dispersion.
2. b) Preparation of the cathode catalyst ink: A mixture comprising 26.0 g of the ionomer component and 19.5 g of 4-Hydroxy-4-methyl-2-pentanone and 19.5 g tert.-butanol is stirred and heated at 60°C for 1 hour in a round bottom flask. Then the additional amount of 24.0 g of 4-Hydroxy-4-methyl-2-pentanone is added while keeping the mixture under gentle stirring. Subsequently, 10.6 g of electrocatalyst EC2' (40 wt.-% Pt/C, Umicore AG & Co KG, Hanau) and 0.5 g of the electrocatalyst EC1 (Elyst® 1000480; 87 wt.-% IrO₂ on TiO₂, Umicore AG & Co KG, Hanau) are added. The amount of EC1 in the total catalyst mixture (EC1+EC2') is 4.8 wt.-%. The overall catalyst/ionomer weight ratio in the electrode is 2.15:1. The mixture is further stirred for 5 minutes and the stirring speed is raised. The final cathode ink is recovered from the bottom of the vessel through a discharge valve by applying a mild nitrogen overpressure on the top of the dispersion. The CCM/MEA preparation steps are conducted as described in reference Example 1.

| Electrochemical testing (Cell reversal tolerance. CRT) | |
|---|---|
| Catalyst loading on anode: | 0.10 mg Pt/cm² and 0.057 mg Ir/cm² |
| Cell reversal tolerance (CRT - BOL): | E = 687 mV (@ 1 A/cm²) |
| Cell reversal tolerance (CRT - EOT): | E = 666 mV (@ 1 A/cm²) |
| Performance loss | - 21 mV (- 3 %) |
| Electrochemical area (CRT - BOL): | 61 m²/g |
| Electrochemical area (CRT - EOT): | 53 m²/g (loss of - 8 m²/g; - 13 %) |

As can be seen, the cell reversal tolerance (CRT) of the MEA is greatly improved due to the presence of iridium dioxide catalyst EC1 in the anode layer. The overall loss of - 21 mV (-3 %) indicates a very stable system with low degradation. Additionally, the ECA remains relatively stable and suffers a loss of only 8 m²/g (13 %).

| Electrochemical testing (Start up/Shut down tests. SUSD) | |
|---|---|
| Catalyst loading on cathode | 0.36 mg Pt/cm² and 0.036 mg Ir/cm² |
| Start up/Shut down (SUSD - BOL): | E = 691 mV (@ 1 A/cm²) |
| Start up/Shut down (SUSD - EOT): | E = 570 mV (@ 1 A/cm²) |
| Performance loss BOL-EOT | - 121 mV |

These results indicate a very stable behavior in SUSD testing (ref to CE2).

### COMPARATIVE EXAMPLE CE3

This example is a Comparative Example to Example 3 of the invention. The elements are similar to Example 3 except for the iridium oxide catalyst. Both, the anode and cathode layers EL1 and EL2 contain Pt/C electrocatalysts (EC2/EC2') in combination with a coventional iridium dioxide powder catalyst. Anode and cathode inks are basically prepared as described in Example 3, with the following modifications:
1. a) Preparation of anode catalyst ink: In the subsequent mixing step, 7.41 g of electrocatalyst EC2 (20 wt.-% Pt/C, Umicore AG & Co KG, Hanau) and 1.0 g of iridium dioxide powder (CAS No. 12030-49-8; > 99.0 wt.-% IrO₂) are employed. The amount of iridium dioxide in the total catalyst mixture (IrO₂+EC2) is 11.9 wt.-%. The catalyst/ionomer ratio in the electrode is 1.25:1.
2. b) Preparation of the cathode catalyst ink: A mixture comprising 25.8 g of the ionomer component and 19.5 g of 4-Hydroxy-4-methyl-2-pentanone and 19.5 g tert.-butanol is stirred and heated at 60°C for 1 hour in a round bottom flask. Then the additional amount of 24.0 g of 4-Hydroxy-4-methyl-2-pentanone is added while keeping the mixture under gentle stirring. Subsequently, 10.6 g of electrocatalyst EC2' (40 wt.-% Pt/C, Umicore AG & Co KG, Hanau) and 0.9 g of iridium dioxide powder (CAS No. 12030-49-8; > 99.0 wt.-% IrO₂) are added. The amount of iridium dioxide in the total catalyst mixture (IrO₂+EC2') is 8.1 wt.-%. The overall catalyst/ionomer weight ratio in the electrode is 2.2:1. The CCM/MEA preparation steps are conducted as described in reference Example 1.

| Electrochemical testing (cell reversal tolerance, CRT) | |
|---|---|
| Catalyst loading on anode: | 0.08 mg Pt/cm² and 0.05 mg Ir/cm² |
| Cell reversal tolerance (CRT - BOL): | E = 617 mV (@ 1 A/cm²) |
| Cell reversal tolerance (CRT - EOT): | > 2.5 V; measurement interrupted |
| Electrochemical area (CRT - BOL): | 40 m²/g |
| Electrochemical area (CRT - EOT): | measurement interrupted |

| Electrochemical testing (Start up/Shut down tests. SUSD) | |
|---|---|
| Catalyst loading on cathode | 0.41 mgPt/cm² and 0.08 mg Ir/cm² |
| Start up/Shut down (SUSD - BOL): | E = 704 mV (@ 1 A/cm²) |
| Start up/Shut down (SUSD - EOT): | E = 440 mV (@ 1 A/cm²) |
| Performance loss BOL-EOT | - 264 mV |

In summary, the cell reversal tolerance (CRT) and start up/shut down (SUSD) tests of the MEAs of CE3 show inferior results compared to Example 3. As a result, MEAs with the electrodes of the present invention containing the iridium oxide catalyst in combination with the inorganic oxide material show a higher stability and longer lifetime, especially under severe electrochemical operating conditions (fuel starvation and start-up/shut-down cycles).

### COMPARATIVE EXAMPLE CE3A

This example is a general comparative Example (CE3A) to all examples of the invention. This MEA does not contain EC1, neither in the anode layer nor in the cathode layer. The comparative example should be used as benchmark for the BOL performance. For the anode ink, electrocatalyst EC2 (20 wt.-% Pt/C, Umicore) is employed and the ink is prepared as outlined in reference Example 2. For the cathode ink, electrocatalyst EC2' (40 wt.-% Pt/C, Umicore) is used and the ink is prepared as described in reference Example 1. The CCM/MEA preparation is conducted as described in reference Example 1.

| Electrochemical testing: | |
|---|---|
| Anode catalyst loading: | 0.09 mg Pt/cm² |
| Cathode catalyst loading: | 0.4 mg Pt/cm² |
| Start up/Shut down (SUSD - BOL): | E = 696 mV (@ 1 A/cm²) |
| Start up/Shut down (SUSD - EOT): | not detectable |

### REFERENCE EXAMPLE 4

This example demonstrates the preparation of a MEA according to the first version of the second embodiment not falling under the scope of the invention. The anode layer EL1 contains the iridium oxide catalyst EC1 and the electrocatalyst EC2.

The anode catalyst ink is made similar as described in reference Example 1 and contains 7.41 g of electrocatalyst EC2 (20 wt.-% Pt/C, Umicore AG & Co KG, Hanau) and 1.11 g of the electrocatalyst EC1 (95 wt.-% IrO₂ on alumina; catalyst according to EP 1701790B1, reference Example 2, Umicore AG & Co KG, Hanau). The amount of EC1 in the total catalyst mixture (EC1+EC2) is 13 wt.-%. The cathode catalyst ink is prepared according to the procedure described in reference Example 1; a Pt-based electrocatalyst supported on carbon black (40 wt.-% Pt/C, Umicore AG & Co KG, Hanau) is employed. The CCM/MEA preparation steps are conducted as described in reference Example 1.

### Electrochemical testing (Cell reversal tolerance. CRT)

The cell reversal tolerance (CRT) of the MEA is markedly improved due to the presence of iridium oxide catalyst EC1 in the anode layer.

## Claims

1. A membrane electrode assembly (MEA) for a PEM Fuel Cell comprising an ionomer membrane having two sides, a first electrode layer (EL1) applied to one side of said membrane and a second electrode layer (EL2) applied to the other side of said membrane,
wherein both of the two electrode layers EL1 and EL2 comprise
- a first electrocatalyst EC1 comprising an iridium oxide component in combination with at least one other inorganic oxide component and
- a second electrocatalyst EC2 and EC2', which are free from iridium, and have different catalyst compositions, wherein EC2 is applied on one side of said membrane and EC2' is applied on the other side of said membrane.

2. The membrane electrode assembly (MEA) according to claim 1, wherein both of the two electrode layers EL1 and EL2 contain no other electrocatalysts except electrocatalysts EC1 and EC2 or EC1 and EC2'.

3. The membrane electrode assembly according to claim 1 and 2, wherein the iridium oxide component in EC1 comprises iridium(IV)-oxide (IrO₂), (Ir₂O₃) and/or mixtures or combinations thereof.

4. The membrane electrode assembly according to any of claims 1 to 3, wherein the iridium oxide component in EC1 is iridium (IV)-oxide (IrO₂).

5. The membrane electrode assembly according to any of claims 1 to 4, wherein the inorganic oxide component in EC1 is selected from the group consisting of titania (TiO₂), silica (SiO₂), alumina (Al₂O₃), zirconia (ZrO₂), tin dioxide (SnO₂), ceria, niobium pentoxide (Nb₂O₅) tantalum pentoxide (Ta₂O₅) and/or mixtures or combinations thereof.

6. The membrane electrode assembly according to any of claims 1 to 5, wherein the inorganic oxide component in EC1 is titania (TiO₂).

7. The membrane electrode assembly according to any of claims 1 to 6, wherein the inorganic oxide component in EC1 has a BET surface area of at least about 50 m²/g, preferably of at least about 100 m²/g.

8. The membrane electrode assembly according to any of claims 1 to 6, wherein the inorganic oxide component in EC1 has a BET surface area of less than about 400 m²/g.

9. The membrane electrode assembly according to any of claims 1 to 8, wherein the inorganic oxide component is present in an amount of less than about 20 wt.-%, preferably less than about 15 wt.-%, based on the total weight of the first electrocatalyst EC1.

10. The membrane electrode assembly according to any of claims 1 to 9, wherein the first electrocatalyst EC1 is present in both of the two electrode layers EL1 and/or EL2 in an amount of about 0.5 to 80 wt.-%, preferably in an amount of about 1 to 70 wt.-% and particularly preferred in an amount of about 2 to 60 wt.-%, based on the total weight of the first and second electrocatalysts EC1+EC2 or EC1+EC2'.

11. The membrane electrode assembly according to any of claims 1 to 10, wherein the second electrocatalyst EC2 or EC2' is a platinum electrocatalyst or a platinum- alloy electrocatalyst, optionally supported on a carbon carrier, on a metal oxide carrier, on a metal core carrier or on a ceramic core carrier.

12. The membrane electrode assembly according to claim 1, wherein the electrode layer EL1 is the anode electrode layer and the second electrocatalyst EC2 contained in EL1 is a platinum electrocatalyst, whereas the electrode layer EL2 is the cathode electrode layer and the second electrocatalyst EC2' contained in EL2 is a platinum electrocatalyst or a platinum-alloy electrocatalyst.

13. The membrane electrode assembly according to claim 12, wherein the platinum-alloy electrocatalyst contained in EL2 is a platinum-cobalt electrocatalyst.

14. The membrane electrode assembly according to claim 1, wherein the electrode layer EL1 is the cathode electrode layer and the second electrocatalyst EC2 contained in EL1 is a platinum electrocatalyst or a platinum-alloy electrocatalyst, whereas the electrode layer EL2 is the anode electrode layer and the second electrocatalyst EC2' contained in EL2 is a platinum-alloy electrocatalyst.

15. The membrane electrode assembly according to claim 14, wherein the second electrocatalyst EC2' contained in EL2 is a platinum-ruthenium catalyst.

16. The membrane electrode assembly according to any of claims 1 to 10, wherein the electrode layer EL1 comprises the first electrocatalyst EC1 and the second electrocatalyst EC2, whereas the electrode layer EL2 contains an iridium-free electrocatalyst EC2'.

17. The membrane electrode assembly according to claim 16, wherein the iridium-free electrocatalyst EC2' contained in EL2 is a platinum or a platinum-alloy electrocatalyst, optionally supported on a carbon carrier, on a metal oxide carrier, on a metal core carrier or on a ceramic core carrier.

18. The membrane electrode assembly according to any of claims 16 and 17, wherein the electrode layer EL1 is the anode electrode layer and the electrode layer EL2 is the cathode electrode layer.

19. The membrane electrode assembly according to any of claims 16 and 17, wherein the electrode layer EL1 is the cathode electrode layer and the electrode layer EL2 is the anode electrode layer.

20. The membrane electrode assembly according to any of claims 1 to 19, wherein the first electrode layer EL1, provided on one side of the ionomer membrane, and the second electrode layer EL2, provided on the other side of the ionomer membrane, are both attached to said ionomer membrane.

21. The membrane electrode assembly (MEA) according to any of claims 1 to 19, wherein the electrode layers EL1 and EL2 are each supported on gas diffusion layers GDL1 and GDL2.

22. Use of the membrane-electrode assembly (MEA) according to any of claims 1 to 21 in PEM Fuel Cells such as Hydrogen PEM Fuel Cells, Reformed-Hydrogen PEM Fuel Cells or Direct Methanol Fuel Cells (DMFC).

## Patentansprüche

1. Membranelektrodenanordnung (MEA) für eine PEM-Brennstoffzelle, die eine lonomermembran mit zwei Seiten, eine erste Elektrodenschicht (EL1), die auf einer Seite der Membran aufgebracht ist, und eine zweite Elektrodenschicht (EL2), die auf der anderen Seite der Membran aufgebracht ist, aufweist,
wobei beide der zwei Elektrodenschichten EL1 und EL2
- einen ersten Elektrokatalysator EC1, der eine Iridiumoxidkomponente in Kombination mit mindestens einer anderen anorganischen Oxidkomponente aufweist, und
- einen zweiten Elektrokatalysator EC2 und EC2' aufweisen, die frei von Iridium sind, und unterschiedliche Katalysatorzusammensetzungen haben, wobei EC2 auf einer Seite der Membran und EC2' auf der anderen Seite der Membran aufgebracht ist.

2. Membranelektrodenanordnung (MEA) nach Anspruch 1, wobei beide der zwei Elektrodenschichten EL1 und EL2 keine anderen Elektrokatalysatoren außer den Elektrokatalysatoren EC1 und EC2 oder EC1 und EC2' enthalten.

3. Membranelektrodenanordnung nach Anspruch 1 und 2, wobei die Iridiumoxidkomponente in EC1 Iridium(IV)-oxid (IrO₂), (Ir₂O₃) und/oder Mischungen oder Kombinationen davon aufweist.

4. Membranelektrodenanordnung nach einem der Ansprüche 1 bis 3, wobei die Iridiumoxidkomponente in EC1 Iridium(IV)-oxid (IrO₂) ist.

5. Membranelektrodenanordnung nach einem der Ansprüche 1 bis 4, wobei die anorganische Oxidkomponente in EC1 ausgewählt ist aus der Gruppe bestehend aus Titandioxid (TiO₂), Siliciumdioxid (SiO₂), Aluminiumoxid (Al₂O₃), Zirkonoxid (ZrO₂), Zinndioxid (SnO₂), Ceroxid, Niobpentoxid (Nb₂O₅), Tantalpentoxid (Ta₂O₅) und/oder Mischungen oder Kombinationen davon.

6. Membranelektrodenanordnung nach einem der Ansprüche 1 bis 5, wobei die anorganische Oxidkomponente in EC1 Titandioxid (TiO₂) ist.

7. Membranelektrodenanordnung nach einem der Ansprüche 1 bis 6, wobei die anorganische Oxidkomponente in EC1 eine BET-Oberfläche von mindestens etwa 50 m²/g, vorzugsweise von mindestens etwa 100 m²/g hat.

8. Membranelektrodenanordnung nach einem der Ansprüche 1 bis 6, wobei die anorganische Oxidkomponente in EC1 eine BET-Oberfläche von weniger als etwa 400 m²/g hat.

9. Membranelektrodenanordnung nach einem der Ansprüche 1 bis 8, wobei die anorganische Oxidkomponente in einer Menge von weniger als etwa 20 Gew.-%, vorzugsweise weniger als etwa 15 Gew.-%, bezogen auf das Gesamtgewicht des ersten Elektrokatalysators EC1, vorhanden ist.

10. Membranelektrodenanordnung nach einem der Ansprüche 1 bis 9, wobei der erste Elektrokatalysator EC1 in beiden der zwei Elektrodenschichten EL1 und/oder EL2 in einer Menge von etwa 0,5 bis 80 Gew.-% vorhanden ist, vorzugsweise in einer Menge von ungefähr 1 bis 70 Gew.-% und besonders bevorzugt in einer Menge von ungefähr 2 bis 60 Gew.-%, bezogen auf das Gesamtgewicht des ersten und zweiten Elektrokatalysators EC1 + EC2 oder EC1 + EC2'.

11. Membranelektrodenanordnung nach einem der Ansprüche 1 bis 10, wobei der zweite Elektrokatalysator EC2 oder EC2' ein Platin-Elektrokatalysator oder ein Platin-Legierungs-Elektrokatalysator ist, der gegebenenfalls auf einem Kohlenstoffträger, auf einem Metalloxidträger, auf einem Metallkernträger oder auf einem Keramikkernträger getragen ist.

12. Membranelektrodenanordnung nach Anspruch 1, wobei die Elektrodenschicht EL1 die Anodenelektrodenschicht ist und der in EL1 enthaltene zweite Elektrokatalysator EC2 ein Platin-Elektrokatalysator ist, während die Elektrodenschicht EL2 die Kathodenelektrodenschicht und der in EL2 enthaltene zweite Elektrokatalysator EC2' ein Platin-Elektrokatalysator oder ein Platin-Legierungs-Elektrokatalysator ist.

13. Membranelektrodenanordnung nach Anspruch 12, wobei der in EL2 enthaltene Platin-Legierungs-Elektrokatalysator ein Platin-Cobalt-Elektrokatalysator ist.

14. Membranelektrodenanordnung nach Anspruch 1, wobei die Elektrodenschicht EL1 die Kathodenelektrodenschicht ist und der in EL1 enthaltene zweite Elektrokatalysator EC2 ein Platin-Elektrokatalysator oder ein Platin-Legierungs-Elektrokatalysator ist, während die Elektrodenschicht EL2 die Anodenelektrodenschicht ist und der in EL2 enthaltene zweite Elektrokatalysator EC2' ein Platin-Legierungs-Elektrokatalysator ist.

15. Membranelektrodenanordnung nach Anspruch 14, wobei der in EL2 enthaltene zweite Elektrokatalysator EC2' ein Platin-Ruthenium-Katalysator ist.

16. Membranelektrodenanordnung nach einem der Ansprüche 1 bis 10, wobei die Elektrodenschicht EL1 den ersten Elektrokatalysator EC1 und den zweiten Elektrokatalysator EC2 aufweist, während die Elektrodenschicht EL2 einen iridiumfreien Elektrokatalysator EC2' enthält.

17. Membranelektrodenanordnung nach Anspruch 16, wobei der in EL2 enthaltene iridiumfreie Elektrokatalysator EC2' ein Platin- oder Platin-Legierungs-Elektrokatalysator ist, der gegebenenfalls auf einem Kohlenstoffträger, auf einem Metalloxidträger, auf einem Metallkernträger oder auf einem Keramikkernträger getragen ist.

18. Membranelektrodenanordnung nach einem der Ansprüche 16 und 17, wobei die Elektrodenschicht EL1 die Anodenelektrodenschicht und die Elektrodenschicht EL2 die Kathodenelektrodenschicht ist.

19. Membranelektrodenanordnung nach einem der Ansprüche 16 und 17, wobei die Elektrodenschicht EL1 die Kathodenelektrodenschicht und die Elektrodenschicht EL2 die Anodenelektrodenschicht ist.

20. Membranelektrodenanordnung nach einem der Ansprüche 1 bis 19, wobei sowohl die erste Elektrodenschicht EL1, die auf einer Seite der lonomermembran vorgesehen ist, als auch die zweite Elektrodenschicht EL2, die auf der anderen Seite der lonomermembran vorgesehen ist, an der lonomermembran befestigt sind.

21. Membranelektrodenanordnung (MEA) nach einem der Ansprüche 1 bis 19, wobei die Elektrodenschichten EL1 und EL2 jeweils auf Gasdiffusionsschichten GDL1 und GDL2 getragen sind.

22. Verwendung der Membranelektrodenanordnung (MEA) nach einem der Ansprüche 1 bis 21 in PEM-Brennstoffzellen wie etwa Wasserstoff-PEM-Brennstoffzellen, PEM-Brennstoffzellen mit reformiertem Wasserstoff, oder Direktmethanol-Brennstoffzellen (DMFC).

## Revendications

1. Ensemble membrane-électrodes (MEA) pour une Pile à Combustible PEM comprenant une membrane ionomère ayant deux côtés, une première couche d'électrode (EL1) appliquée à un côté de ladite membrane et une deuxième couche d'électrode (EL2) appliquée à l'autre côté de ladite membrane,
dans lequel les deux couches d'électrode EL1 et EL2 comprennent
- un premier électrocatalyseur EC1 comprenant un composant d'oxyde d'iridium en combinaison avec au moins un autre composant d'oxyde inorganique et
- un deuxième électrocatalyseur EC2 et EC2', qui sont dépourvus d'iridium, et ont des compositions de catalyseur différentes, où EC2 est appliqué sur un côté de ladite membrane et EC2' est appliqué sur l'autre côté de ladite membrane.

2. Ensemble membrane-électrodes (MEA) selon la revendication 1, dans lequel les deux couches d'électrode EL1 et EL2 ne contiennent aucun autre électrocatalyseur à l'exception des électrocatalyseurs EC1 et EC2 ou EC1 et EC2'.

3. Ensemble membrane-électrodes selon les revendications 1 et 2, dans lequel le composant d'oxyde d'iridium dans EC1 comprend l'oxyde d'iridium (IV) (IrO₂), (Ir₂O₃) et/ou des mélanges ou combinaisons de ceux-ci.

4. Ensemble membrane-électrodes selon l'une des revendications 1 à 3, dans lequel le composant d'oxyde d'iridium dans EC1 est l'oxyde d'iridium (IV) (IrO₂).

5. Ensemble membrane-électrodes selon l'une des revendications 1 à 4, dans lequel le composant d'oxyde inorganique dans EC1 est choisi dans le groupe constitué par l'oxyde de titane (TiO₂), la silice (SiO₂), l'alumine (Al₂O₃), la zircone (ZrO₂), le dioxyde d'étain (SnO₂), la cérine, le pentoxyde de niobium (Nb₂O₅), le pentoxyde de tantale (Ta₂O₅) et/ou des mélanges ou combinaisons de ceux-ci.

6. Ensemble membrane-électrodes selon l'une des revendications 1 à 5, dans lequel le composant d'oxyde inorganique dans EC1 est l'oxyde de titane (TiO₂).

7. Ensemble membrane-électrodes selon l'une des revendications 1 à 6, dans lequel le composant d'oxyde inorganique dans EC1 a une aire de surface BET d'au moins environ 50 m²/g, de préférence d'au moins environ 100 m²/g.

8. Ensemble membrane-électrodes selon l'une des revendications 1 à 6, dans lequel le composant d'oxyde inorganique dans EC1 a une aire de surface BET inférieure à environ 400 m²/g.

9. Ensemble membrane-électrodes selon l'une des revendications 1 à 8, dans lequel le composant d'oxyde inorganique est présent en une quantité inférieure à environ 20% en poids, de préférence inférieure à environ 15% en poids, par rapport au poids total du premier électrocatalyseur EC1.

10. Ensemble membrane-électrodes selon l'une des revendications 1 à 9, dans lequel le premier électrocatalyseur EC1 est présent dans les deux couches d'électrode EL1 et/ou EL2 en une quantité allant d'environ 0,5 à 80% en poids, de préférence en une quantité allant d'environ 1 à 70% en poids et de manière particulièrement préférée en une quantité allant d'environ 2 à 60% en poids, par rapport au poids total des premier et deuxième électrocatalyseurs EC1+EC2 ou EC1+EC2'.

11. Ensemble membrane-électrodes selon l'une des revendications 1 à 10, dans lequel le deuxième électrocatalyseur EC2 ou EC2' est un électrocatalyseur en platine ou un électrocatalyseur en alliage de platine, éventuellement supporté sur un support de carbone, sur un support d'oxyde métallique, sur un support de noyau métallique ou sur un support de noyau en céramique.

12. Ensemble membrane-électrodes selon la revendication 1, dans lequel la couche d'électrode EL1 est la couche d'électrode anodique et le deuxième électrocatalyseur EC2 contenu dans EL1 est un électrocatalyseur en platine, tandis que la couche d'électrode EL2 est la couche d'électrode cathodique et le deuxième électrocatalyseur EC2' contenu dans EL2 est un électrocatalyseur en platine ou un électrocatalyseur en alliage de platine.

13. Ensemble membrane-électrodes selon la revendication 12, dans lequel l'électrocatalyseur en alliage de platine contenu dans EL2 est un électrocatalyseur en platine-cobalt.

14. Ensemble membrane-électrodes selon la revendication 1, dans lequel la couche d'électrode EL1 est la couche d'électrode cathodique et le deuxième électrocatalyseur EC2 contenu dans EL1 est un électrocatalyseur en platine ou un électrocatalyseur en alliage de platine, tandis que la couche d'électrode EL2 est la couche d'électrode anodique et le deuxième électrocatalyseur EC2' contenu dans EL2 est un électrocatalyseur en alliage de platine.

15. Ensemble membrane-électrodes selon la revendication 14, dans lequel le deuxième électrocatalyseur EC2' contenu dans EL2 est un catalyseur au platine-ruthénium.

16. Ensemble membrane-électrodes selon l'une des revendications 1 à 10, dans lequel la couche d'électrode EL1 comprend le premier électrocatalyseur EC1 et le deuxième électrocatalyseur EC2, tandis que la couche d'électrode EL2 contient un électrocatalyseur dépourvu d'iridium EC2'.

17. Ensemble membrane-électrodes selon la revendication 16, dans lequel l'électrocatalyseur dépourvu d'iridium EC2' contenu dans EL2 est un électrocatalyseur en platine ou en alliage de platine, éventuellement supporté sur un support de carbone, sur un support d'oxyde métallique, sur un support de noyau métallique ou sur un support de noyau en céramique.

18. Ensemble membrane-électrodes selon l'une des revendications 16 et 17, dans lequel la couche d'électrode EL1 est la couche d'électrode anodique et la couche d'électrode EL2 est la couche d'électrode cathodique.

19. Ensemble membrane-électrodes selon l'une des revendications 16 et 17, dans lequel la couche d'électrode EL1 est la couche d'électrode cathodique et la couche d'électrode EL2 est la couche d'électrode anodique.

20. Ensemble membrane-électrodes selon l'une des revendications 1 à 19, dans lequel la première couche d'électrode EL1, prévue sur un côté de la membrane ionomère, et la deuxième couche d'électrode EL2, prévue sur l'autre côté de la membrane ionomère, sont toutes deux attachées à ladite membrane ionomère.

21. Ensemble membrane-électrodes (MEA) selon l'une des revendications 1 à 19, dans lequel les couches d'électrode EL1 et EL2 sont chacune supportées sur des couches de diffusion de gaz GDL1 et GDL2.

22. Utilisation de l'ensemble membrane-électrodes (MEA) selon l'une des revendications 1 à 21 dans des Piles à Combustible PEM telles que des Piles à Combustible PEM à Hydrogène, des Piles à Combustible PEM à Hydrogène Reformé ou des Piles à Combustible à Méthanol Direct (DMFC).
